(19) Europäisches Patentamt / European Patent Office / Office européen des brevets

(11) **EP 3 835 831 B1**

(12) **FASCICULE DE BREVET EUROPEEN**

(45) Date de publication et mention de la délivrance du brevet:
**30.03.2022 Bulletin 2022/13**

(21) Numéro de dépôt: **20212560.5**

(22) Date de dépôt: **08.12.2020**

(51) Classification Internationale des Brevets (IPC):
**G01T 3/06** *(2006.01)* **G01T 1/167** *(2006.01)*

(52) Classification Coopérative des Brevets (CPC):
**G01T 3/06; G01T 1/167**

(54) **PROCÉDÉ DE DÉTECTION DE RADIATIONS ET SYSTÈME ASSOCIÉ METTANT EN OEUVRE UNE DISCRIMINATION DES COÏNCIDENCES NEUTRON-GAMMA**

STRAHLUNGSDETEKTIONSVERFAHREN MIT NEUTRON-GAMMA-DISKRIMINIERUNG UND ENTSPRECHENDES SYSTEM

METHOD FOR RADIATION DETECTION COMPRISING NEUTRON-GAMMA DISCRIMINATION AND CORRESPONDING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2019 FR 1914402**

(43) Date de publication de la demande:
**16.06.2021 Bulletin 2021/24**

(73) Titulaire: **Commissariat à l'énergie atomique et aux énergies alternatives 75015 Paris (FR)**

(72) Inventeurs:
• **BOTTAU, Vincent**
  **13090 Aix en Provence (FR)**
• **DE STEFANO, Roberto**
  **13090 Aix en Provence (FR)**
• **CARASCO, Cédric**
  **83560 Saint Julien (FR)**
• **ELEON, Cyrille**
  **83640 St-Zacharie (FR)**
• **PEROT, Bertrand**
  **13770 Venelles (FR)**

(74) Mandataire: **Brevalex**
  **95, rue d'Amsterdam**
  **75378 Paris Cedex 8 (FR)**

(56) Documents cités:
**US-A1- 2014 361 186**

• **SIMONY B ET AL: "Cross-Talk Characterization in Passive Neutron Coincidence Counting of Radioactive Waste Drums With Plastic Scintillators", IEEE TRANSACTIONS ON NUCLEAR SCIENCE, IEEE SERVICE CENTER, NEW YORK, NY, US, vol. 63, no. 3, 1 juin 2016 (2016-06-01), pages 1513-1519, XP011614711, ISSN: 0018-9499, DOI: 10.1109/TNS.2016.2542290 [extrait le 2016-06-22]**
• **PEROT B: "Non-destructive Nuclear Measurements in Support to Nuclear Industry", 2019 IEEE NUCLEAR SCIENCE SYMPOSIUM AND MEDICAL IMAGING CONFERENCE (NSS/MIC), IEEE, 26 octobre 2019 (2019-10-26), pages 1-4, XP033748147, DOI: 10.1109/NSS/MIC42101.2019.9060035**

**Description**

**DOMAINE TECHNIQUE**

La présente invention a trait aux mesures de coïncidences neutroniques de fissions spontanées ou induites, dans le but de caractériser ou détecter une matière nucléaire. La présente invention peut être mise en œuvre dans tous les systèmes de détection de radiations sensibles à la fois aux rayonnements neutron et gamma, et plus particulièrement aux postes de mesure neutronique. Elle trouve application notamment pour la caractérisation de colis de déchets, pour la détection de menaces nucléaires dans le domaine de la sécurité, pour le contrôle des matières nucléaires, etc.

**ÉTAT DE LA TECHNIQUE ANTÉRIEURE**

Actuellement, le compteur proportionnel à hélium 3 reste la référence en termes de performances pour détecter ou caractériser les matières nucléaires. Il présente en effet une bonne efficacité de détection des neutrons thermalisés et est très peu sensible aux rayonnements gamma. Cependant, son coût est devenu prohibitif (entre 5000 € et 10000 € pour un compteur typique de 100 cm de long, 2,54 cm de diamètre rempli à une pression de 4 bar) et a presque décuplé en une vingtaine d'années, en raison d'une demande croissante (notamment suite aux attentats du 11 septembre 2001, pour les contrôles aux frontières, etc.) et d'une baisse de la production d'hélium 3 (qui est notamment un sous-produit de la maintenance des armes nucléaires).

Or, les postes de mesure neutronique utilisés pour caractériser ou détecter une matière nucléaire nécessitent des dizaines, voire des centaines de compteurs (référence [1]).

On cherche donc à réduire le coût global des postes de mesure de neutronique en remplaçant les compteurs à hélium 3 par des détecteurs alternatifs qui soient viables sur les plans technique et industriel (notamment en termes de coût, de disponibilité et de facilité de mise en œuvre).

L'effort scientifique international a permis de dégager plusieurs détecteurs alternatifs potentiels :

- les compteurs gazeux à trifluorure de bore ($BF_3$), fortement enrichi en $^{10}B$ ;
- les compteurs gazeux à dépôts de bore ;
- les scintillateurs organiques.

Les compteurs gazeux à trifluorure de bore ($BF_3$), fortement enrichi en $^{10}B$, ont longtemps été utilisés en remplacement des compteurs à hélium 3. En effet, ces compteurs ont des prix peu élevés et le bore 10 possède une section efficace de capture des neutrons thermiques très élevée (3840 barns pour le $^{10}B$ contre 5330 barns pour le $^3He$). De plus, la réaction $^{10}B$ $(n,\alpha)$ génère une grande énergie de réaction permettant une bonne discrimination neutron-gamma. Cependant, la pression de ce gaz dans les tubes est limitée à 1 bar et ne permet pas des efficacités de détection aussi élevées que pour les tubes à hélium 3 pressurisées à 4 bars. En outre, le $BF_3$ est extrêmement toxique et ne permet pas de considérer cette alternative comme viable. La plupart des fournisseurs ont d'ailleurs arrêté la production de ces compteurs pour des raisons de sécurité. De plus, les constantes de temps associées à la détection des neutrons sont de l'ordre de plusieurs dizaines de microsecondes (temps nécessaire à leur thermalisation car ces compteurs sont sensibles aux neutrons thermiques), ce qui rend difficilement utilisable ces compteurs pour de très forts taux de comptage.

Les compteurs gazeux à dépôts de bore présentent des caractéristiques proches de celles des compteurs hélium 3. Comme pour les compteurs $BF_3$, la détection s'effectue via la capture d'un neutron thermique par le bore 10. Ces compteurs représentent une bonne alternative aux compteurs hélium 3 du point de vue technique, car ils sont peu coûteux et nécessitent des hautes tensions peu élevées. L'efficacité de détection est cependant environ 2 fois plus faible que celle des compteurs à hélium 3 à volume égal et il faut donc davantage de compteurs pour atteindre des performances équivalentes, ce qui rend le coût du système comparable à celui du système actuel à hélium 3 en incluant le nombre accru de voies électroniques nécessaire. De plus, les constantes de temps associées à la détection des neutrons thermiques sont de l'ordre de plusieurs dizaines de microsecondes, ce qui rend difficilement utilisable ces compteurs pour de très forts taux de comptage.

En ce qui concerne les scintillateurs organiques, la R&D a été fortement orientée ces dernières années vers la discrimination neutron-gamma dans les portiques radiologiques de sécurité équipant les sites sensibles (postes frontière, centres nucléaires, ports maritimes, etc.), comme les deux systèmes décrits dans les références [2] et [3]. Parmi les scintillateurs organiques, on distingue :

- les scintillateurs organiques liquides ;
- les cristaux organiques scintillants ;
- les scintillateurs organiques solides de type $^6LiF/ZnS$ ;
- les scintillateurs plastiques.

**EP 3 835 831 B1**

Les scintillateurs organiques liquides permettent une discrimination neutron-gamma par la forme des impulsions (PSD pour « Pulse Shape Discrimination » en anglais). Ils sont cependant limités en taille (du fait d'une perte de l'information PSD à cause des réflexions de lumière dans les grands détecteurs) ; or, de grands volumes de détection sont nécessaires pour la détection en coïncidence et la multiplication de scintillateurs organiques liquides de petite taille qui serait alors nécessaire rendrait le coût du système de mesure comparable à l'utilisation de compteurs à $^3$He. Par ailleurs, ces scintillateurs liquides sont toxiques et inflammables. Enfin, bien que les constantes de temps associées aux impulsions soient de l'ordre de la dizaine de nanosecondes, ils ne peuvent pas être utilisés pour les domaines d'applications précédemment mentionnés où les taux de comptage sont élevés à cause des empilements, en raison de la perte de l'information PSD située sur la traîne des impulsions.

Les cristaux organiques scintillants disposent de forts rendements de scintillation, mais s'utilisent avec la PSD qui ne sera pas viable dans notre cas, pour les raisons évoquées ci-dessus (forts taux de comptage, taille). De plus, l'efficacité de détection est dépendante de la direction de la particule incidente, rendant son utilisation difficile.

Les scintillateurs organiques solides de type $^6$LiF/ZnS disposent de caractéristiques équivalentes à celles des compteurs à hélium 3, notamment en termes d'efficacité de détection des neutrons et de temps de vie dans le système. Cependant, en plus d'une forte sensibilité aux rayonnements gamma, ils sont très couteux et peu développés par les industriels. Cette alternative n'est donc pas viable.

Différentes catégories de scintillateurs organiques plastiques peuvent être déterminées, la typologie présentée étant volontairement construite par rapport à l'objectif d'obtention de la discrimination neutron-gamma.

Certains scintillateurs organiques plastiques (notamment les scintillateurs organique plastiques PVT pour polyvinyle-toluène et PS pour polystyrène) de petit volume permettent la PSD, mais avec une moindre efficacité que les scintillateurs liquides. Ils présentent en outre les limitations de la PSD évoquées ci-dessus en termes de taille et de taux de comptage.

Les scintillateurs organiques plastiques dopés par des absorbants neutroniques (bore 10, lithium 6, etc.) nécessitent une thermalisation des neutrons au préalable, rendant alors ces détecteurs beaucoup plus lents. Leur coût est aussi nettement plus élevé que celui des simples scintillateurs au plastique PVT non dopé.

Le système décrit dans la référence [2] utilise des couches de gadolinium ou de cadmium intercalées entre des scintillateurs plastiques pour pouvoir effectuer une discrimination énergétique entre les rayonnements gamma et les neutrons (les rayonnements gamma ne pouvant générer des dépôts énergétiques que de quelques MeV au maximum, tandis que la capture d'un neutron par le gadolinium génère des cascades gamma d'une énergie totale voisine de 8 MeV).

Le système décrit dans la référence [3] est un système de scintillateurs en plastique avec des absorbants neutroniques intercalés (cadmium ou gadolinium), utilisant des critères temporels pour discriminer les neutrons et les rayonnements gamma (différences des temps de vol représentées par des écarts temporels sur des histogrammes 1D).

On peut souligner que les deux derniers systèmes sont respectivement adaptés à la détection radiologique passive dans des portiques de sécurité (référence [2]) et à la discrimination neutron-gamma pour distinguer des menaces de type nucléaire et radiologique (référence [3]). Ils ne sont cependant pas adaptés pour la caractérisation de la matière nucléaire dans des colis de déchets (mesure des coïncidences dues aux fissions spontanées) ou dans les conteneurs maritimes par interrogation neutronique (coïncidences dues aux fissions induites). Ils permettent en effet d'effectuer du comptage total en différenciant signal neutronique et gamma, mais ils ne permettent pas de différencier des neutrons en provenance des fissions de ceux issus d'autres origines, comme les réactions $(\alpha,n)$ dans les fûts de déchets de forte activité alpha. En outre, leur efficacité de détection n'est pas suffisante pour constituer un système de mesure permettant la détection de coïncidences de multiplicité élevée (au moins 3 impulsions simultanément).

Parmi ces potentiels compteurs alternatifs au compteur à $^3$He, les scintillateurs organiques solides, comme ceux en plastique PVT ou PS, ou tout autre détecteur présentant des propriétés similaires en termes de prix, d'efficacité, de taille , de durée d'impulsion et de sécurité (et notamment, non toxicité, non inflammabilité et équipement qui n'est pas sous pression), apparaissent donc comme ceux présentant le plus d'avantages, en premier en termes de coût (5 à 10 fois moins chers que les compteurs à $^3$He, à efficacité de détection identique), mais également en termes d'encombrement (grand volume de détection) et de rapidité (avec une réponse de l'ordre de la nanoseconde contre la microseconde pour les compteurs à $^3$He), permettant de limiter les coïncidences accidentelles.

Cependant, ces scintillateurs organiques solides sont beaucoup plus sensibles aux rayonnements gamma que les compteurs à $^3$He, rayonnements qui peuvent générer des coïncidences parasites dues à la détection simultanée de neutrons et/ou de rayonnements gamma corrélés ne provenant pas de fissions.

Par ailleurs, ces scintillateurs organiques solides en plastique PVT ou PS (ci-après dénommés « scintillateurs PVT » ou « scintillateurs PS ») sont sensibles au phénomène de diaphonie, c'est-à-dire à la détection quasi-simultanée d'impulsions multiples générées par une seule particule (neutron ou gamma) suite aux diffusions neutroniques ou gamma entre détecteurs voisins, créant également des coïncidences réelles mais parasites (références [4] et [5]).

En outre, à très fort taux de comptage, des impulsions corrélées ou non (coïncidences réelles ou accidentelles) peuvent se combiner pour former des coïncidences accidentelles parasites de multiplicité d'ordre élevé (3 impulsions ou plus détectées simultanément, mais non dues à des fissions).

Une solution à ce problème fondée sur une méthode d'analyse statistique a été proposée dans la référence [6]. Le système décrit dans la référence [6] permet de différentier neutrons et gamma à partir d'une analyse statistique effectuée sur un grand nombre d'évènements. Ce système attribue globalement un nombre de neutrons détectés et un nombre de rayonnements gamma détectés. Par contre, ce système ne permet pas d'identifier, évènement par évènement, la nature de la particule ayant interagi, ce qui ne permet pas de distinguer des neutrons produits par fission (2 à 3 neutrons simultanément) des neutrons produits par réactions alpha-n (on rappelle que lors d'une réaction alpha-n, une particule alpha est émise puis capturée par un noyau léger comme l'oxygène ou le fluor, ce qui conduit à l'émission d'un neutron unique).

Les inventeurs se sont donc fixé comme objectif de trouver une méthode de discrimination des différents types de coïncidences (à savoir, les coïncidences utiles (de fission) et les coïncidences parasites) générées par des neutrons et des rayonnements gamma émis par une source pour ce type de détecteur.

## EXPOSÉ DE L'INVENTION

À cet effet, l'invention propose un procédé de détection de radiations, comprenant les étapes suivantes, mises en œuvre par un calculateur relié à N détecteurs, disposés autour d'une source de radiations, N étant un nombre entier supérieur ou égal à 3, chaque détecteur comprenant un photomultiplicateur associé à un scintillateur organique plastique non dopé avec un absorbant neutronique :

- détection, dans une fenêtre temporelle, de coïncidences d'impulsions dont la multiplicité est d'ordre 2 ou supérieur entre les signaux électriques fournis par les photomultiplicateurs, une coïncidence d'impulsion de multiplicité d'ordre 2 ou supérieur étant détectée lorsque, dans la fenêtre temporelle, une première impulsion est détectée dans le signal électrique fourni par le photomultiplicateur associé à un premier scintillateur, une deuxième impulsion est détectée dans le signal électrique fourni par le photomultiplicateur associé à un deuxième scintillateur et une troisième impulsion est détectée dans le signal électrique fourni par le photomultiplicateur associé à un troisième scintillateur ;
- détermination d'un premier nombre de coïncidences d'impulsions dont la multiplicité est d'ordre 2 ou supérieur et dont l'écart temporel entre la première et la deuxième impulsion est compris dans une première fenêtre d'écart temporel choisie pour inclure des paires de type $(\gamma, n)$ et $(n, n)$, et exclure des paires de type $(\gamma, \gamma)$ ;
- détermination d'un deuxième nombre de coïncidences d'impulsions dont la multiplicité est d'ordre 2 ou supérieur et dont l'écart temporel entre la deuxième et la troisième impulsion est compris dans une deuxième fenêtre d'écart temporel choisie pour inclure des paires de type $(n, n)$ et exclure des paires de type $(\gamma, \gamma)$ et $(\gamma, n)$ ;
- comptabilisation, parmi les premier et deuxième nombres de coïncidences d'impulsions de multiplicité d'ordre 2 ou supérieur, des coïncidences situées dans une zone temporelle délimitée par la première et la deuxième fenêtre d'écart temporel, moyennant quoi on obtient un dénombrement des coïncidences de type $(\gamma, n, n)$ et $(n, n, n)$ se produisant dans cette zone temporelle.

De préférence, les limites inférieure et supérieure de la première et de la deuxième fenêtre d'écart temporel sont fonction de la distance maximale entre les scintillateurs et la source, et donc de la taille et de la position des scintillateurs et de la source, ainsi que de la vitesse maximale des rayonnements gamma émis par la source, pour la limite inférieure, et de la vitesse minimale des neutrons détectables par les détecteurs, pour la limite supérieure.

Avantageusement, ces limites inférieure et supérieure sont adaptées en fonction de la taille et de la position de la source de radiations et de la taille et de la position de chaque scintillateur et sont typiquement de quelques nanosecondes pour la limite inférieure et de quelques centaines de nanosecondes pour la limite supérieure. Par exemple, la limite inférieure est typiquement de quelques nanosecondes à 20 ns, et la limite supérieure de 50 ns à 1000 ns. Pour préciser, la fenêtre inférieure est liée aux rayonnements gamma qui atteignent très vite les détecteurs, soit par exemple 7 ns pour des mesures de sources nues, et par exemple 10 ns à 20 ns pour des mesures de colis de déchets ou de conteneurs maritimes; pour la limite supérieure, c'est la vitesse minimale des neutrons détectables, typiquement 50 ns ou bien encore 250 ns pour un conteneur maritime.

À titre d'exemple, ce mode de fonctionnement avec un générateur (pour détecter des coïncidences de fissions induites, au lieu des coïncidences de fissions spontanées sans générateur) peut, dans le cas d'une inspection de conteneurs maritimes, nécessiter des fenêtres jusqu'à 250 ns compte tenu de la grande taille des conteneurs dont la section est de 240 cm $\times$ 240 cm.

A contrario, dans les exemples ci-après décrits pour un mode de réalisation détaillé de l'invention, la fenêtre temporelle n'est que de 50 ns, puisque le système de détection selon l'invention est utilisé pour caractériser des fûts de 120 litres, ayant un diamètre de 40 cm.

Selon un mode de réalisation préféré, le procédé comprend en outre un générateur de neutrons, apte à générer des neutrons de manière pulsée, et la fenêtre temporelle pendant laquelle le calculateur détecte les coïncidences d'impulsions de multiplicité d'ordre 2 ou supérieur est située entre deux impulsions successives du générateur de neutrons.

L'invention concerne également un système de détection de radiations, qui comprend :

- N scintillateurs organiques plastiques non dopés avec un absorbant neutronique, disposés autour d'une source de radiations, N étant un nombre entier supérieur ou égal à 3;
- un photomultiplicateur associé à chaque scintillateur pour fournir un signal électrique représentatif du signal lumineux généré dans le scintillateur ;
- un calculateur configuré pour :

  o détecter, dans une fenêtre temporelle, des coïncidences d'impulsions avec une multiplicité d'ordre 2 ou supérieur entre les signaux électriques fournis par les photomultiplicateurs, une coïncidence d'impulsion de multiplicité d'ordre 2 ou supérieur étant détectée lorsque, dans la fenêtre temporelle, une première impulsion est détectée via le signal électrique fourni par le photomultiplicateur associé à un premier scintillateur, une deuxième impulsion est détectée via le signal électrique fourni par le photomultiplicateur associé à un deuxième scintillateur et une troisième impulsion est détectée via le signal électrique fourni par le photomultiplicateur associé à un troisième scintillateur ;

  o déterminer un premier nombre de coïncidences d'impulsions dont la multiplicité est d'ordre 2 ou supérieur et dont l'écart temporel entre la première et la deuxième impulsion est compris dans une première fenêtre d'écart temporel choisie pour inclure des paires de type $(\gamma, n)$ et $(n, n)$, et exclure des paires de type $(\gamma,\gamma)$;

  ∘ déterminer un deuxième nombre de coïncidences d'impulsions dont la multiplicité est d'ordre 2 ou supérieur et dont l'écart temporel entre la deuxième et la troisième impulsion est compris dans une deuxième fenêtre d'écart temporel choisie pour inclure des paires de type $(n, n)$ et exclure des paires de type $(\gamma,\gamma)$ et $(\gamma, n)$;

  ∘ comptabiliser, parmi les premier et deuxième nombres de coïncidences d'impulsions de multiplicité d'ordre 2 ou supérieur, les coïncidences situées dans une zone temporelle délimitée par la première et la deuxième fenêtre d'écart temporel, moyennant quoi on obtient un dénombrement des coïncidences de type $(\gamma,n,n)$ et $(n,n,n)$ se produisant dans cette zone temporelle.

De préférence, que ce soit dans le procédé ou le système, les scintillateurs organiques plastiques non dopés avec un absorbant neutronique sont des scintillateurs plastiques en polyvinyle-toluène (PVT). Il peut également s'agir de scintillateurs en polystyrène (PS). Pour rappel, un absorbant neutronique peut être choisi parmi $^{10}$B, $^{7}$Li, Cd, Gd, etc.

La source de radiations est, le plus souvent, étendue (comme c'est le cas dans un colis de déchets par exemple) ou non équidistante de tous les détecteurs selon sa position dans l'objet mesuré (dans un colis de déchets, par exemple). Toutefois, que ce soit dans le procédé ou le système, les scintillateurs plastiques sont de préférence disposés à égale distance de la source de radiations. En effet, on réalise de préférence un système de mesure symétrique (détecteurs en cercle autour de l'objet) afin de ne pas « étaler » les temps d'arrivée des neutrons (surtout) et gamma (plus rapides donc plus groupés que les neutrons, même si les distances aux détecteurs diffèrent) et donc pour limiter la taille des fenêtres ou cadres d'intégration temporels.

La solution proposée dans le cadre de l'invention est un traitement des données permettant non seulement de pallier le problème de sensibilité des scintillateurs PVT ou PS face aux rayonnements gamma parasites et au phénomène de diaphonie (interactions entre détecteurs voisins créant des coïncidences parasites), mais aussi de différencier les neutrons en provenance des réactions $(\alpha,n)$ des neutrons de fissions, grâce à une nouvelle méthode de discrimination temporelle des coïncidences. Le traitement de données selon l'invention permet d'isoler efficacement le signal utile des fissions et d'améliorer ainsi le rapport signal/bruit en cas d'émissions de neutrons et de rayonnements gamma générant des coïncidences parasites. À titre d'exemples de coïncidences parasites, on peut citer l'émission simultanée (par rapport au temps de détection, qui est de l'ordre de la nanoseconde) de neutrons et de rayonnements gamma lors de réactions $(\alpha,n)$ et $(n,n')$ sur les éléments environnant la matière nucléaire, ou bien encore les cascades gamma $(\gamma,\gamma)$ faisant suite à des désintégrations radioactives $\alpha$ ou $\beta$ des isotopes radioactifs en présence (matière nucléaire, produits de fission ou d'activation éventuels dans des déchets radioactifs, par exemple).

Le procédé et le système selon l'invention permettent la détection de coïncidences de multiplicité élevée (au moins 3 impulsions simultanément) et visent à distinguer les coïncidences utiles de fission et les coïncidences parasites, et non pas seulement les impulsions neutroniques et des impulsions gamma. On cherche même à conserver une partie du signal gamma de fission (en moyenne 8 rayonnements gamma sont émis simultanément par fission en plus des contre seulement 2 à 3 neutrons, en moyenne, utilisés usuellement en comptage neutronique des coïncidences), contrairement à ce qui est recherché par l'homme de l'art avec les détecteurs à $^{3}$He ou à dépôt de bore en caractérisation des déchets, ou dans les portiques de sécurité à base de scintillateurs, où la meilleure discrimination neutron-gamma possible est recherchée.

La présente invention a de nombreuses applications. Elle peut par exemple être utilisée pour la caractérisation des déchets radioactifs, pour la détection de menaces nucléaires dans le domaine de la sécurité ou bien encore pour le contrôle des matières nucléaires dans le domaine de la non-prolifération.

## BRÈVE DESCRIPTION DES DESSINS

La présente invention sera mieux comprise à la lecture de la description qui va suivre, donnée à titre purement indicatif et nullement limitatif, en faisant référence aux dessins annexés sur lesquels :

la figure 1 représente un mode de réalisation d'un système de détection selon l'invention ;
la figure 2 représente le schéma de principe d'un premier montage expérimental mis en place pour démontrer la faisabilité de l'invention lors d'une mesure neutronique passive ;
la figure 3 est une représentation temporelle des multiplicités d'ordre 2 (M2) et supérieures pour une mesure de 5 minutes de la source d'américium-béryllium ;
la figure 4 est une représentation temporelle des multiplicités d'ordre 2 (M2) et supérieures pour une mesure de 5 minutes de la source de californium 252 ;
la figure 5 est une représentation temporelle des multiplicités d'ordre 2 (M2) et supérieures pour une mesure de 5 minutes d'une source de cobalt 60 ;
la figure 6 représente le schéma de principe d'un second montage expérimental mis en place pour démontrer la faisabilité de l'invention lors d'une mesure neutronique active.

## DESCRIPTION DES MODES DE RÉALISATION

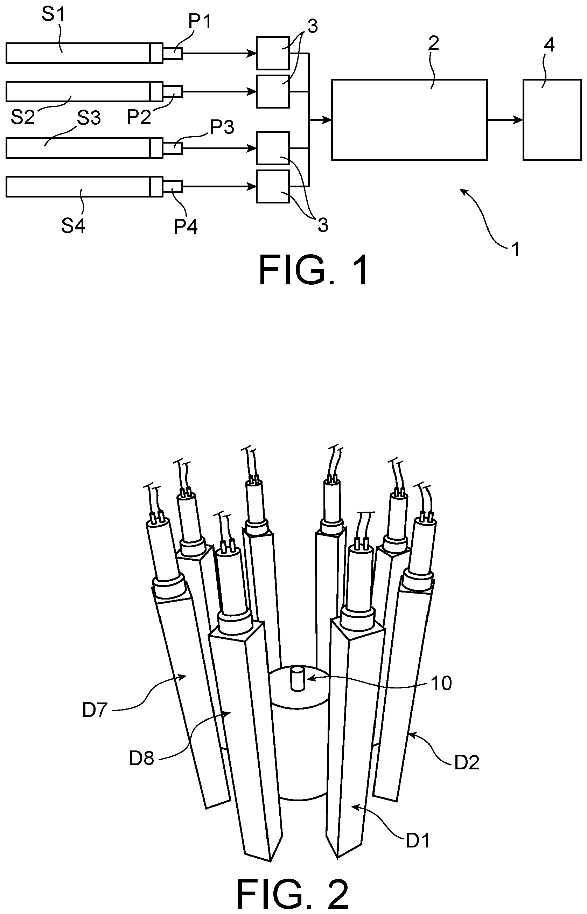

Dans la figure 1 est représenté un mode de réalisation d'un système de détection 1 selon l'invention. Il comporte ici 4 détecteurs D1-D4 ; chaque détecteur D1-D4 comprend un scintillateur S1-S4 en plastique PVT, associé à un photomultiplicateur P1-P4. Le système de détection 1 comporte également un calculateur 2 relié aux photomultiplicateurs P1-P4 par l'intermédiaire de convertisseurs analogique-numérique 3. Le système 1 peut également comprendre un module d'interface homme machine 4, par exemple un écran sur lequel sont restitués les résultats de mesure.
Dans la figure 2 est représenté un montage expérimental mis en place pour démontrer la faisabilité de l'invention proposée. Ce montage expérimental va permettre de réaliser une mesure neutronique passive d'une source étalon 10.
Dans ce montage expérimental, on a disposé, au centre et à environ 50 cm du sol, une source étalon 10 et, disposés autour de la source étalon, un système de détection 1 comportant 8 détecteurs D1-D8 qui sont disposés à une distance de 35 cm autour de la source étalon 10.
Plus précisément, le dispositif de mesure 1 comprend :

- 8 détecteurs D1-D8 comprenant chacun un scintillateur S1-S8 en plastique PVT, de référence EJ-200 de la société Eljen technology, à base de polyvinyle toluène (PVT), de dimensions $10 \times 10 \times 100$ cm$^3$, associé à un photomulti-plicateur P1-P8, de référence 3M-P-E1-X-N de la société Electron Tubes Ltd ;
- un calculateur 2 configuré pour mettre en œuvre les étapes suivantes :

    - la détection, dans une fenêtre temporelle, des coïncidences d'impulsions de multiplicité d'ordre 2 ou supérieur entre les signaux électriques fournis par les photomultiplicateurs, une coïncidence d'impulsion de multiplicité d'ordre 2 ou supérieur étant détectée lorsque, dans la fenêtre temporelle, une première impulsion est détectée dans le signal électrique fourni par le photomultiplicateur associé à un premier scintillateur, une deuxième impulsion est détectée dans le signal électrique fourni par le photomultiplicateur associé à un deuxième scintillateur et une troisième impulsion est détectée dans le signal électrique fourni par le photomultiplicateur associé à un troisième scintillateur ;
    - la détermination d'un premier nombre de coïncidences d'impulsions dont la multiplicité est d'ordre 2 ou supérieur et dont l'écart temporel entre la première et la deuxième impulsion est compris dans une première fenêtre d'écart temporel choisie pour inclure des paires de type $(\gamma,n)$ et $(n,n)$, et exclure des paires de type $(\gamma,\gamma)$;
    - la détermination d'un deuxième nombre de coïncidences d'impulsions dont la multiplicité est d'ordre 2 ou supérieur et dont l'écart temporel entre la deuxième et la troisième impulsion est compris dans une deuxième fenêtre d'écart temporel choisie pour inclure des paires de type $(n,n)$ et exclure des paires de type $(\gamma,\gamma)$ et $(\gamma,n)$;
    - la comptabilisation, parmi les premier et deuxième nombres de coïncidences d'impulsions de multiplicité d'ordre 2 ou supérieur, des coïncidences situées dans une zone temporelle délimitée par la première et la deuxième fenêtre d'écart temporel, moyennant quoi on obtient un dénombrement des coïncidences de type (y,n,n) et (n,n,n) se produisant dans cette zone temporelle.

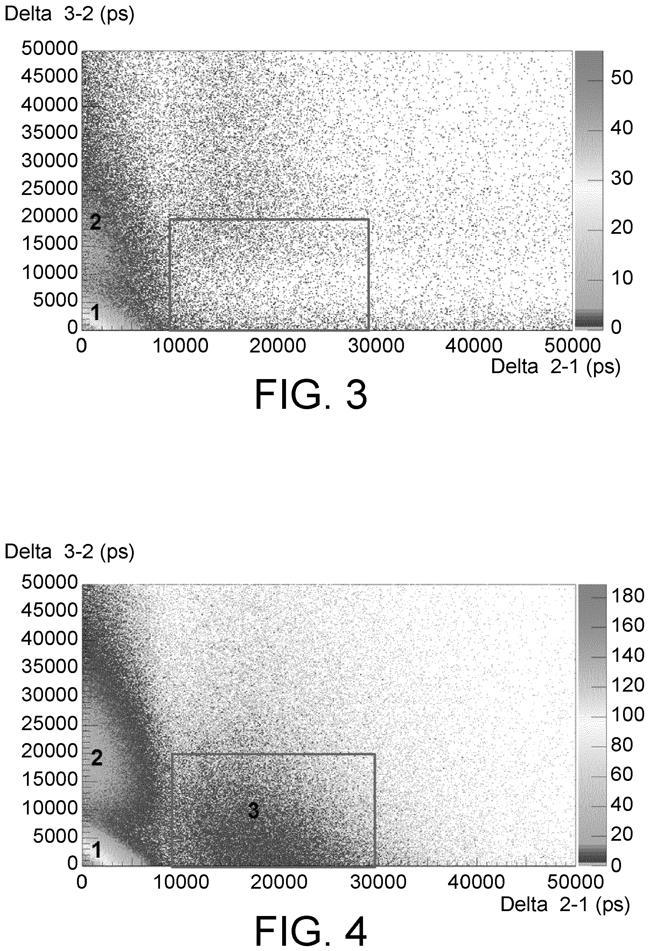

Dans cet exemple de réalisation, on a 8 détecteurs, soit 7 ordres de multiplicité possibles pour les coïncidences. On va donc détecter les coïncidences d'impulsions dont la multiplicité est d'ordre 2, 3, 4, 5, 6 et 7 et pour chacune de ces coïncidences, on va déterminer les premier et deuxième nombre de coïncidences d'impulsion de multiplicité d'ordre 2 ou supérieur. Ainsi, pour les coïncidences de multiplicité d'ordre 7 par exemple, on va déterminer le premier nombre de coïncidences d'impulsions de multiplicité d'ordre 7 dont l'écart temporel entre la première et la deuxième impulsion (paire 1-2) des 8 impulsions est compris dans une première fenêtre d'écart temporel (entre 10 ns et 30 ns pour les figures 3 et 4 par exemple), on va déterminer le deuxième nombre de coïncidences d'impulsions de multiplicité d'ordre 7 dont l'écart temporel entre la deuxième et la troisième impulsion (paire 2-3) des 8 impulsions est compris dans une deuxième fenêtre d'écart temporel (entre 0 ns et 20 ns pour les figures 3 et 4 par exemple) et enfin, on va comptabiliser, parmi ces premier et deuxième nombres de coïncidences, les coïncidences situées dans une zone temporelle délimitée par la première et la deuxième fenêtre d'écart temporel (c'est-à-dire, par exemple, pour un histogramme à deux dimensions ayant en abscisse l'écart de temps entre les première et deuxième impulsions et en ordonnées les deuxième et troisième impulsions, dans un rectangle comme illustré dans les figures 3 et 4). En procédant ainsi, on s'assure que la deuxième impulsion est la même dans le cas de la paire 1-2 et de la paire 2-3, chaque coup dans l'histogramme à deux dimensions correspondant forcement à une combinaison 1-2-3 corrélée dans une fenêtre de coïncidences donnée (qui est de 100 ns dans l'exemple des figures 3 et 4).

Ici, les fonctions du calculateur sont obtenues en utilisant :

-    un numériseur d'impulsions, ici une carte électronique de référence DT5730B fabriquée par l'entreprise CAEN, pour enregistrer les données de mesure ; et
-    un PC équipé d'un logiciel d'acquisition CoMPASS®, développé par l'entreprise CAEN (non représenté).

Le numériseur permet d'acquérir des données sur 8 voies et sur 14 bits, à une fréquence d'échantillonnage de 500 MHz (échantillonnage du signal toutes les 2 ns). Il permet ainsi aux signaux sortant de chaque photomultiplicateur d'être récupérés, puis numérisés. Une connectique USB permet un transfert des données du numériseur jusqu'au PC à un débit pouvant atteindre au maximum 50 MB/s.

Le logiciel est associé, entre autres, au numériseur. Il permet une utilisation selon deux modes :

-    un mode « *waves* », pour observer en temps réel l'acquisition d'histogrammes en énergie et en temps et les graphiques de discrimination par PSD (lorsque des détecteurs adaptés à la méthode sont utilisés) ;
-    un mode « *list only* », pour enregistrer les données dans des fichiers textes ou des fichiers binaires. Les informations sur l'énergie, l'instant d'acquisition et le détecteur de provenance sont notamment listées.

Différentes sources étalons vont être utilisées, à savoir une source étalon de californium-252, une source étalon d'américium-béryllium et une source étalon de cobalt-60, représentant respectivement un signal utile de fissions spontanées ($^{252}$Cf) et deux sources de bruit de fond parasite (neutrons et rayonnements gamma de réactions ($\alpha$,n) pour l'AmBe et rayonnements gamma en cascade dus à des radionucléides présents dans les fûts de déchets pour le $^{60}$Co).

La méthode de comptage des multiplicités employée est le registre à décalage, utilisé classiquement avec les compteurs hélium 3.

Dans un premier temps, nous considérons uniquement les sources de californium-252 et d'américium-béryllium.

Les comptages aux différents ordres de multiplicité (de l'ordre 0 (M0) jusqu'à l'ordre 7 (M7)), pour des mesures de 5 minutes, de la source de californium-252 ($^{252}$Cf) et de la source américium-béryllium (AmBe) sont donnés dans les tableaux suivants :

| AmBe | R+A | A | | $^{252}$Cf | R+A | A |
|------|------|------|---|------|------|------|
| M0 | 21 890 855 | 23 487 902 | | M0 | 7 035 663 | 8 651 476 |
| M1 | 1 727 671 | 238 952 | | M1 | 1 260 824 | 34 076 |
| M2 | 112 941 | 10 531 | | M2 | 312 956 | 2 309 |
| M3 | 6 237 | 626 | | M3 | 67 306 | 486 |
| M4 | 319 | 41 | | M4 | 10 470 | 102 |
| M5 | 26 | 4 | | M5 | 1147 | 17 |
| M6 | 7 | 0 | | M6 | 101 | 1 |
| M7 | 2 | 0 | | M7 | 2 | 1 |

Dans les tableaux ci-dessus, « R+A » représente le comptage des coïncidences « réelles + accidentelles », tandis que « A » représente le comptage des coïncidences « accidentelles ».

On prend les taux d'émissions neutroniques réactualisés à la date de la mesure, à partir des activités $A_0$ à l'origine des sources étalons (AmBe pour les $(\alpha,n)$ et Californium 252 pour les fissions spontanées). Le rapport des taux d'émissions neutronique de ces deux sources à la date de la mesure définit le ratio alpha et vaut :

$$ratio\ \alpha = \frac{taux\ d'émission\ neutronique\ (réactions\ (\alpha,n))}{taux\ d'émission\ neutronique\ (fissions\ spontanées)}$$

$$ratio\ \alpha = \frac{2,3.\,10^5}{3,6.\,10^4} = 6,39$$

On a donc un rapport signal/bruit (en termes d'émission neutronique uniquement) de 1/6,39 = 0,16.

Afin de mieux isoler les évènements de fissions spontanées, les tableaux ci-dessus montrent qu'il est intéressant de s'intéresser aux ordres de multiplicité 2 (M2) et supérieurs. En effet, l'ordre 1 des multiplicités est fortement affecté par les coïncidences réelles parasites provoquées par des réactions $(\alpha,n)$ de la source AmBe (dont un rayonnement y de 4,4 MeV est émis en coïncidence avec un neutron avec une probabilité de 57 % créant ainsi une multiplicité M1 parasite, voire une multiplicité d'ordre supérieur à M1 en raison de la diaphonie). À partir de l'ordre 2, la proportion de coïncidences réelles utiles devient prédominante.

L'évaluation du nombre de triplets (i.e. coïncidences de multiplicité d'ordre 2), ci-après noté $t_{tri}$, s'effectue grâce à l'équation 1 ci-dessous :

$$t_{tri} = \sum_{i=2}^{p} \frac{i \times (i-1)}{2} \times [(r+a)_i - a_i] - \frac{\sum_{i=1}^{p} i \times a_i}{s} \times \sum_{i=1}^{p} i \times [(r+a)_i - a_i]$$

où « p » est l'ordre maximal des multiplicités ayant été incrémenté, « $(r+a)_i$ » et « $a_i$ » sont respectivement les comptages des coïncidences « réelles + accidentelles » et « accidentelles » obtenus à l'ordre de multiplicité i, et « s » est le nombre de singulets.

Le rapport des triplets permet d'obtenir une amélioration du rapport signal/bruit :

$$\frac{triplets\ (Cf252)}{triplets\ (AmBe)} = \frac{580959}{106109} = 5,48$$

On obtient donc un rapport signal/bruit d'une valeur de 5,48, soit une amélioration du rapport signal/bruit d'un facteur 35 environ par rapport au simple ratio des émissions neutroniques.

Pour obtenir un gain supplémentaire du rapport signal/bruit, on choisit de représenter toutes les combinaisons possibles de 3 impulsions coïncidentes dans un histogramme temporel en deux dimensions. La première dimension représente l'intervalle de temps entre les 2 premières impulsions de la coïncidence, tandis que la deuxième dimension représente l'intervalle de temps entre les 2 dernières impulsions de la coïncidence. Les histogrammes obtenus pour les deux sources neutroniques (AmBe et $^{252}$Cf respectivement) sont présentés respectivement dans la figure 3 (AmBe) et la figure 4 ($^{252}$Cf).

Afin d'interpréter les deux histogrammes des figures 3 et 4, il est important de rappeler les vitesses des différentes particules rencontrées :

- les neutrons de 400 keV (en dessous de cette énergie, les neutrons ne sont plus détectables) : $v_n$ = 0,87 cm / ns ;
- les neutrons de 2 MeV (énergie moyenne des neutrons de fissions spontanées du californium-252) : $v_n$ = 1,95 cm / ns ;
- les neutrons de 14 MeV (énergie maximum des neutrons de fissions spontanées du californium-252) : $v_n$ = 5,17 cm / ns ;
- les rayonnements gamma : $v_\gamma$ = 30 cm / ns.

Sachant que les 8 détecteurs sont situés à 35 cm de la source, les rayonnements gamma, dont la vitesse est constante quelle que soit l'énergie (correspondant à la célérité de la lumière), arrivent de manière groupée au niveau des détecteurs. Leur temps de vol est de l'ordre de la nanoseconde et se retrouvent condensés dans la région 1. Cette région 1 correspond aux coïncidences (y,y,y) et son élargissement est principalement dû à la taille et à la résolution temporelle du système de mesure, cette dernière étant de l'ordre de quelques nanosecondes.

Les neutrons arrivent au niveau des détecteurs, en moyenne, environ 17 ns après leur émission (énergie moyenne des neutrons de 2 MeV, et distance source-détecteur de 35 cm). La région 2 est donc peuplée par des coïncidences (y,y,n) dont les deux premières impulsions correspondent à une paire ($\gamma,\gamma$) présentant un intervalle temporel faible (axe Delta 2-1), tandis que les 2ème et 3ème impulsions forment une deuxième paire ($\gamma$,n) présentant un écart temporel plus important (axe Delta 3-2). L'élargissement de cette région est dû aux différentes vitesses des neutrons, allant de 7 ns de temps de vol pour les neutrons les plus rapides (14 MeV), à 50 ns de temps de vol pour des neutrons moins rapides (400 keV).

On constate que les régions 1 et 2 précédemment commentées sont présentes sur les deux histogrammes (figures 3 et 4), mais les comptages sont plus importants pour la source de californium-252 (figure 4), qui émet de nombreux rayonnements gamma et neutrons corrélés par fission spontanée (respectivement 7 rayonnements gamma et 3,5 neutrons en moyenne par fission).

Ces régions 1 et 2 se distinguent aussi sur l'histogramme de la source AmBe (figure 3), car les réactions $^9Be(\alpha,n)^{12}C$ peuvent engendrer l'émission d'un rayonnement gamma corrélé avec le neutron émis, suite à la désexcitation du noyau de $^{12}C$ produit. Le rayonnement gamma peut par exemple être détecté deux fois par phénomène de diaphonie, et engendrer une première paire d'impulsions (y,y), qui sera potentiellement suivie par la détection du neutron, générant une coïncidence (y,y,n) parasite.

La principale différence entre les deux histogrammes tient en l'apparition d'une région 3 (un cadre délimitant la région 3 est représenté dans la figure 4 et a également été représenté dans la figure 3 pour faciliter la comparaison) pour le cas de la source de fissions spontanées. La localisation temporelle de la région 3 correspond à des coïncidences pour lesquelles il y a un intervalle de temps long (de 7 à 30 ns) entre les deux premières impulsions (paire 1-2), pouvant correspondre à une paire ($\gamma$,n) ou (n,n). L'intervalle de temps entre la deuxième impulsion et la troisième impulsion (paire 2-3) (sachant que la deuxième impulsion de la paire 1-2 correspond à la deuxième impulsion de la paire 2-3) varie entre 0 et 25 ns environ, ce qui signifie un écart temporel compris entre 7 ns et 55 ns entre la première et la troisième impulsion. La paire formée par les deux dernières impulsions, hormis en cas de coïncidence accidentelle avec un rayonnement gamma de bruit de fond, ne peut être identifiée que par une paire (n,n). Les coïncidences de la région 3 sont donc majoritairement des (y,n,n) ou des (n,n,n) qui représentent en grande partie des coïncidences de fission spontanée, puisque l'histogramme pour la source AmBe ne présente que de rares évènements dans cette région (dus seulement à la diaphonie et/ou à des coïncidences accidentelles).

Cet outil de discrimination temporelle des types de coïncidences peut aussi être testé grâce à l'introduction d'une source de rayonnements gamma parasites de cobalt 60 (910 kBq). Les deux rayonnements gamma principaux (1173 keV et 1332 keV) sont émis en cascade et sont donc temporellement corrélés. Ils sont susceptibles de venir peupler les ordres de multiplicités 2 (triplets d'impulsions) et supérieurs par des coïncidences accidentelles qui peuvent être nombreuses à taux de comptage élevé, ainsi que par des diaphonies.

Le comptage aux ordres de multiplicité de 0 à 7 pour une mesure de 5 minutes de cette source de cobalt 60 est présenté dans le tableau 2 ci-dessous :

| $^{10}$Co | R+A | A |
|---|---|---|
| M0 | 62 756 777 | 68 709 295 |
| M1 | 6 950 599 | 1 391 592 |
| M2 | 503 633 | 128 903 |
| M3 | 26 406 | 8 442 |
| M4 | 1108 | 353 |
| M5 | 42 | 14 |
| M6 | 5 | 0 |
| M7 | 0 | 0 |

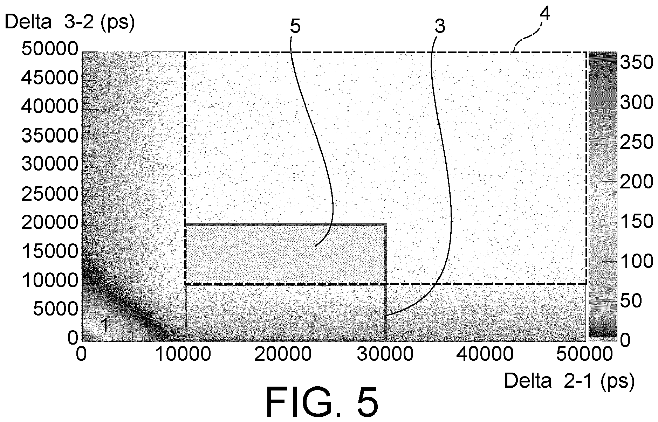

La carte temporelle correspondante des comptages des multiplicités pour cette source est quant à elle illustrée dans la figure 5.

Dans l'histogramme de la figure 5, on retrouve une région 1 des coïncidences ($\gamma,\gamma,\gamma$). Cette région 1 peut être peuplée par la détection des deux rayonnements gamma corrélés dont l'un génère deux impulsions par diaphonie.

Les régions 2 et 3 ne sont pas retrouvées, car il n'y a aucune émission neutronique dans cette configuration.

Il est à noter que les bandes observées sur les axes Delta 2-1 et Delta 3-2 sont dues à des coïncidences d'un rayonnement gamma accidentel avec la paire 1173 keV -1332 keV de rayonnements gamma corrélés.

Sur l'axe Delta 2-1, c'est la détection d'un rayonnement gamma accidentel qui déclenche l'ouverture de la fenêtre de coïncidences (distribution uniforme de Delta 2-1, mais temps court Delta 2-3 entre la 2ème et la 3ème détection), alors que sur l'axe Delta 3-2, le premier rayonnement gamma d'une paire (γ,γ) corrélée est détectée, ou bien un rayonnement gamma isolé qui génère de la diaphonie, qui déclenche la fenêtre de coïncidence (temps court entre la 1ère et la 2ème impulsion, mais distribution de delta 2-3 uniforme).

Toute la zone temporelle délimitée par le cadre 4 (Delta 2-1 ≥ 10ns, Delta 3-2 ≥ 10 ns) est épargnée par la contribution des rayonnements gamma corrélés.

En considérant alors une sélection commune à la région des fissions spontanées précédemment définie (zone temporelle délimitée par le cadre 3), avec la zone temporelle délimitée par le cadre 4, il est possible de s'affranchir en grande majorité de la contribution gamma de bruit de fond, tout en conservant une grande partie du signal des fissions spontanées. Cette nouvelle sélection (10 ns ≤ Delta 2-1 ≤ 30 ns et 10 ns ≤ Delta 3-2 ≤ 20 ns, partie 5) conduit à un rapport signal / bruit amélioré dans le cas des sources neutroniques ($^{252}$Cf et AmBe) par rapport au rapport signal / bruit de 5,48 (rapport des triplets ($^{252}$Cf) sur les triplets (AmBe)), comme le montre le dénombrement des évènements qui s'y trouvent. Par contre, on constate que les comptages sont nettement plus faibles.

Ainsi, dans la sélection commune, on obtient le rapport suivant :

$$\frac{N_{selection}(Cf252)}{N_{selection}(AmBe)} = \frac{31182}{3848} = 8,1$$

En ajoutant à présent le dénombrement obtenu pour la source de cobalt 60 (qui correspond à un nouveau terme de bruit de fond s'ajoutant à l'AmBe) dans cette nouvelle sélection, on obtient :

$$\frac{N_{selection}(Cf252)}{N_{selection}(AmBe) + N_{selection}(Co60)} = \frac{31182}{3848 + 1345} = 6$$

On constate que cela ne détériore pas de manière conséquente le rapport signal/bruit précédent (8,1).

Sans cette sélection améliorée, et en considérant tous les événements dans l'ancienne sélection (cadre 3), ce rapport signal sur bruit aurait été de :

$$\frac{N_{ancienne\ selection}(Cf252)}{N_{ancienne\ selection}(AmBe) + N_{ancienne\ selection}(Co60)} = \frac{91312}{7489 + 25447} = 2,8$$

On obtient un ratio signal/bruit deux fois moins bon dans cette ancienne sélection par rapport à la sélection optimisée (partie 5).

Cette méthode peut également être utilisée pour réaliser une mesure neutronique active. Elle peut par exemple être appliquée à des mesures de fissions induites dans des matières nucléaires entre les tirs d'une source pulsée de neutrons (par exemple un générateur de neutrons D-T (deuterium-tritium) pulsé délivrant des impulsions de neutrons rapides de 14 MeV).

Par exemple, cette méthode peut être utilisée dans le domaine de la sécurité pour détecter des matières nucléaires ($^{235}$U, $^{239}$Pu) dissimulées dans des containers maritimes. En effet, lorsque des matières fissiles sont dissimulées dans des chargements organiques favorisant la thermalisation des neutrons rapides émis par le générateur de neutrons, il est possible de tirer profit du signal des fissions induites par ces neutrons thermiques interrogateurs après la fin de chaque impulsion du générateur. Ces fissions induites génèrent des coïncidences de même nature que celles dues aux fissions spontanées du plutonium ou du $^{252}$Cf abordées précédemment dans le domaine de la caractérisation des déchets ou des matières nucléaires. On s'intéresse notamment, de façon similaire, aux coïncidences de multiplicité 2 (M2 ou triplets d'impulsions) qui apparaissent dans les régions 2 et 3 des cartes de discrimination temporelle à deux dimensions illustrées dans les figures 3, 4 et 5.

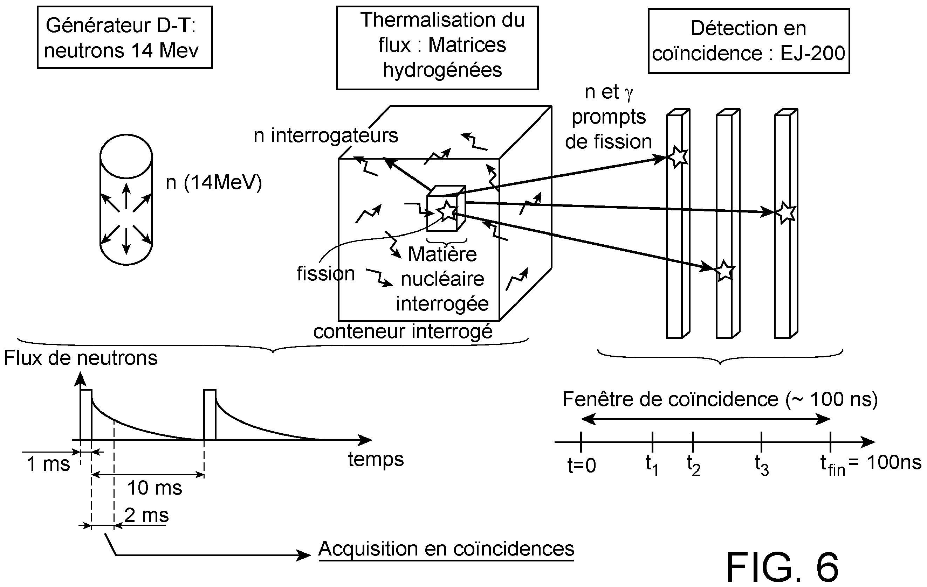

Le schéma de principe de la mesure pulsée d'interrogation neutronique active, suivie de la discrimination neutron /gamma des coïncidences selon le procédé objet de la présente invention, est présenté dans la figure 6.

Ici, on a des impulsions d'une durée de 1 ms, un temps de 10 ms entre chaque impulsion, et on mesure pendant environ 2 ms après la fin de chaque impulsion. Ainsi, la zone d'intérêt pour mesurer les coïncidences (acquisition en coïncidences) commence juste après l'impulsion de 1 ms du générateur et dure pendant environ 2 ms après la fin de chaque impulsion ; la fenêtre de coïncidence peut être d'environ 100 ns, comme indiqué dans la figure 6.

Une première sélection temporelle d'une zone d'intérêt située entre les impulsions du générateur D-T est opérée à une échelle de temps de l'ordre de la milliseconde, ou de la fraction de milliseconde, de façon connue en soi par l'homme de l'art (références [1] et [7]) ; puis on opère une seconde sélection temporelle des coïncidences à l'échelle de la nanoseconde, de la même façon que décrit précédemment pour les mesures passives de sources $^{252}$Cf et AmBe, mais ici sur une fenêtre de coïncidences pouvant aller jusqu'à quelques centaines de nanosecondes dans le cas de l'inspection de conteneurs maritimes de grande taille (temps de vol des neutrons plus long). À titre d'exemple, pour des conteneurs maritimes de grandes tailles, une fenêtre de 200 à 250 ns peut s'avérer nécessaire.

Contrairement aux mesures passives évoquées précédemment, le signal parasite est ici essentiellement dû à des rayonnements gamma prompts de capture radiative (n,y). Certains sont émis au travers de cascades gamma qui peuvent créer des coïncidences parasites, notamment de multiplicité 2 (M2 ou triplets d'impulsions). Le fer par exemple, présent en grande quantité dans les conteneurs de transport et dans le générateur de neutrons lui-même, est le siège d'un taux élevé de captures radiatives (n,$\gamma$) suivies de cascades gamma ($\gamma$,$\gamma$). Ces coïncidences de multiplicité d'ordre élevé sont aussi alimentées par des détections accidentelles d'impulsions non corrélées temporellement et des événements de diaphonie.

## RÉFÉRENCES

[1] B. Pérot et al., « The characterization of radioactive waste: a critical review of techniques implemented or under development at CEA, France », EPJ Nuclear Sci. Technol. 4, 3 (2018) 1-24
[2] US 2016/0291196 A1
[3] FR 3 010 534 A1
[4] B. Simony at al., « Cross-talk characterization in passive neutron coïncidence counting of radioactive waste drums with plastic scintillators », IEEE Transactions on Nuclear Science, Vol. 63, No. 3, June 2016, pp. 1513-1519
[5] FR 2 970 339 A1
[6] FR 2 947 344 A1
[7] W.E. Kunz et al., « A 1-nCi/g sensitivity transuranic waste assay system using pulsed neutron interrogation », in: INMM Annual Meeting, Palm Beach, Florida, LA-UR-90-1794, CONF-800655-4, 1980

## Revendications

1.  Procédé de détection de radiations, comprenant les étapes suivantes, mises en œuvre par un calculateur relié à N détecteurs disposés autour d'une source de radiations, N étant un nombre entier supérieur ou égal à 3, chaque détecteur comprenant un photomultiplicateur associé à un scintillateur organique plastique non dopé avec un absorbant neutronique :

    - détection, dans une fenêtre temporelle, de coïncidences d'impulsions dont la multiplicité est d'ordre 2 ou supérieur entre les signaux électriques fournis par les photomultiplicateurs, une coïncidence d'impulsion de multiplicité d'ordre 2 ou supérieur étant détectée lorsque, dans la fenêtre temporelle, une première impulsion est détectée dans le signal électrique fourni par le photomultiplicateur associé à un premier scintillateur, une deuxième impulsion est détectée dans le signal électrique fourni par le photomultiplicateur associé à un deuxième scintillateur et une troisième impulsion est détectée dans le signal électrique fourni par le photomultiplicateur associé à un troisième scintillateur; le procédé étant **caractérisé en ce qu'**il comprend en outre les étapes suivantes:
    - détermination d'un premier nombre de coïncidences d'impulsions dont la multiplicité est d'ordre 2 ou supérieur et dont l'écart temporel entre la première et la deuxième impulsion est compris dans une première fenêtre d'écart temporel choisie pour inclure des paires de type ($\gamma$, n) et (n, n), et exclure des paires de type ($\gamma$, $\gamma$);
    - détermination d'un deuxième nombre de coïncidences d'impulsions dont la multiplicité est d'ordre 2 ou supérieur et dont l'écart temporel entre la deuxième et la troisième impulsion est compris dans une deuxième fenêtre d'écart temporel choisie pour inclure des paires de type (n, n) et exclure des paires de type ($\gamma$, $\gamma$) et ($\gamma$, n);
    - comptabilisation, parmi les premier et deuxième nombres de coïncidences d'impulsions de multiplicité d'ordre 2 ou supérieur, des coïncidences situées dans une zone temporelle délimitée par la première et la deuxième fenêtre d'écart temporel, moyennant quoi on obtient un dénombrement des coïncidences de type (y,n,n) et (n,n,n) se produisant dans cette zone temporelle.

2.  Procédé selon la revendication 1, dans lequel les limites inférieure et supérieure de la première et de la deuxième fenêtre d'écart temporel sont fonction de la distance maximale entre les scintillateurs et la source, et donc de la taille et de la position des scintillateurs et de la source, ainsi que de la vitesse maximale des rayonnements gamma émis par la source, pour la limite inférieure, et de la vitesse minimale des neutrons détectables par les détecteurs, pour la limite supérieure.

3. Procédé selon la revendication 2, dans lequel ces limites inférieure et supérieure sont adaptées en fonction de la taille et de la position de la source de radiations et de la taille et de la position de chaque scintillateur et sont typiquement de quelques nanosecondes pour la limite inférieure et de quelques centaines de nanosecondes pour la limite supérieure. Par exemple, la limite inférieure est typiquement de quelques nanosecondes à 20 ns, et la limite supérieure de 50 ns à 1000 ns.

4. Procédé selon l'une quelconque des revendications 1 à 3, comprenant en outre un générateur de neutrons, apte à générer des neutrons de manière pulsée, et dans lequel la fenêtre temporelle pendant laquelle le calculateur détecte les coïncidences d'impulsions de multiplicité d'ordre 2 ou supérieur est située entre deux impulsions successives du générateur de neutrons.

5. Procédé selon l'une quelconque des revendications 1 à 4, dans lequel les scintillateurs organiques plastiques non dopés avec un absorbant neutronique sont des scintillateurs plastiques en polyvinyle-toluène (PVT).

6. Système de détection de radiations (1) comprenant :

   - N scintillateurs organiques plastiques non dopés avec un absorbant neutronique (S1-S8), disposés autour d'une source de radiations (10), N étant un nombre entier supérieur ou égal à 3 ;
   - un photomultiplicateur (P1-P8) associé à chaque scintillateur pour fournir un signal électrique représentatif du signal lumineux généré dans le scintillateur ;
   - le système étant **caractérisé en ce qu'**il comprend un calculateur (2) configuré pour:

     o détecter, dans une fenêtre temporelle, des coïncidences d'impulsions de multiplicité d'ordre 2 ou supérieur entre les signaux électriques fournis par les photomultiplicateurs, une coïncidence d'impulsion de multiplicité d'ordre 2 ou supérieur étant détectée lorsque, dans la fenêtre temporelle, une première impulsion est détectée via le signal électrique fourni par le photomultiplicateur associé à un premier scintillateur, une deuxième impulsion est détectée via le signal électrique fourni par le photomultiplicateur associé à un deuxième scintillateur et une troisième impulsion est détectée via le signal électrique fourni par le photomultiplicateur associé à un troisième scintillateur ;
     o déterminer un premier nombre de coïncidences d'impulsions dont la multiplicité est d'ordre 2 ou supérieur et dont l'écart temporel entre la première et la deuxième impulsion est compris dans une première fenêtre d'écart temporel choisie pour inclure des paires de type $(\gamma, n)$ et $(n, n)$, et exclure des paires de type $(\gamma, \gamma)$;
     o déterminer un deuxième nombre de coïncidences d'impulsions dont la multiplicité est d'ordre 2 ou supérieur et dont l'écart temporel entre la deuxième et la troisième impulsion est compris dans une deuxième fenêtre d'écart temporel choisie pour inclure des paires de type $(n, n)$ et exclure des paires de type $(\gamma, \gamma)$ et $(\gamma, n)$ ;
     o comptabiliser, parmi les premier et deuxième nombres de coïncidences d'impulsions de multiplicité d'ordre 2 ou supérieur, les coïncidences situées dans une zone temporelle délimitée par la première et la deuxième fenêtre d'écart temporel, moyennant quoi on obtient un dénombrement des coïncidences de type $(\gamma,n,n)$ et $(n,n,n)$ se produisant dans cette zone temporelle.

7. Système selon la revendication 6, dans lequel les scintillateurs organiques plastiques non dopés avec un absorbant neutronique sont des scintillateurs plastiques en polyvinyle-toluène (PVT).

**Patentansprüche**

1. Verfahren zur Strahlungsdetektion, umfassend die folgenden Schritte, die durch einen Rechner durchgeführt werden, der mit N Detektoren verbunden ist, die um eine Strahlungsquelle herum angeordnet sind, wobei N eine ganze Zahl größer oder gleich 3 ist, wobei jeder Detektor einen Fotovervielfältiger umfasst, der einem organischen Kunststoffszintillator zugeordnet ist, der nicht mit einem Neutronenabsorber dotiert ist:

   - Detektieren, in einem Zeitfenster, von Koinzidenzen von Pulsen, deren Multiplizität von der Ordnung 2 oder größer ist, zwischen den elektrischen Signalen, die durch die Fotovervielfältiger geliefert werden, wobei eine Pulskoinzidenz mit einer Multiplizität der Ordnung 2 oder größer detektiert wird, wenn in dem Zeitfenster ein erster Puls in dem elektrischen Signal detektiert wird, das durch den Fotovervielfältiger geliefert wird, der einem ersten Szintillator zugeordnet ist, ein zweiter Puls in dem elektrischen Signal detektiert wird, das durch den Fotovervielfältiger geliefert wird, der einem zweiten Szintillator zugeordnet ist, und ein dritter Puls in dem elektrischen Signal detektiert wird, das durch den Fotovervielfältiger geliefert wird, der einem dritten Szintillator zugeordnet ist; wobei das Verfahren **dadurch gekennzeichnet ist, dass** es ferner die folgenden Schritte umfasst:

- Bestimmen einer ersten Zahl von Koinzidenzen von Pulsen, deren Multiplizität von der Ordnung 2 oder größer ist, und bei denen der Zeitabstand zwischen dem ersten und dem zweiten Puls in einem ersten Zeitabstandsfenster enthalten ist, das derart gewählt ist, dass es Paare vom Typ $(\gamma, n)$ und $(n, n)$ enthält und Paare vom Typ $(\gamma, \gamma)$ ausschließt;

- Bestimmen einer zweiten Zahl von Koinzidenzen von Pulsen, deren Multiplizität von der Ordnung 2 oder größer ist, und bei denen der Zeitabstand zwischen dem zweiten und dem dritten Puls in einem zweiten Zeitabstandsfenster enthalten ist, das derart gewählt ist, dass es Paare vom Typ $(n, n)$ enthält und Paare vom Typ $(\gamma, \gamma)$ und $(\gamma, n)$ ausschließt;

- Registrieren, aus der ersten und der zweiten Zahl von Koinzidenzen von Pulsen mit einer Multiplizität von der Ordnung 2 oder größer, der Koinzidenzen, die in einer Zeitzone liegen, die durch das erste und das zweite Zeitabstandsfenster begrenzt ist, wodurch man eine Aufzählung der Koinzidenzen vom Typ $(\gamma, n, n)$ und $(n, n, n)$ erhält, die in dieser Zeitzone auftreten.

2. Verfahren nach Anspruch 1, bei dem die untere und die obere Grenze des ersten und des zweiten Zeitabstandsfensters eine Funktion des maximalen Abstands zwischen den Szintillatoren und der Quelle sind, und somit der Größe und der Position der Szintillatoren und der Quelle, sowie der maximalen Geschwindigkeit der durch die Quelle emittierten Gammastrahlen für die untere Grenze und der minimalen Geschwindigkeit der durch die Detektoren detektierbaren Neutronen für die obere Grenze.

3. Verfahren nach Anspruch 2, bei dem diese untere und obere Grenze als Funktion der Größe und der Position der Strahlungsquelle und der Größe und der Position jedes Szintillators angepasst sind und typischerweise einige Nanosekunden für die untere Grenze und einige hundert Nanosekunden für die obere Grenze sind. Beispielsweise ist die untere Grenze typischerweise einige Nanosekunden bis 20 ns und die obere Grenze 50 ns bis 1000 ns.

4. Verfahren nach einem der Ansprüche 1 bis 3, ferner umfassend einen Neutronengenerator, der dazu ausgelegt ist, Neutronen auf gepulste Weise zu generieren, und bei dem das Zeitfenster, während dessen der Rechner die Koinzidenzen von Pulsen mit einer Multiplizität von der Ordnung 2 oder größer detektiert, zwischen zwei aufeinander folgenden Pulsen des Neutronengenerators liegt.

5. Verfahren nach einem der Ansprüche 1 bis 4, bei dem die organischen Kunststoffszintillatoren, die nicht mit einem Neutronenabsorber dotiert sind, Kunststoffszintillatoren aus Polyvinyltoluol (PVT) sind.

6. System zur Strahlungsdetektion (1), umfassend:

- N organische Kunststoffszintillatoren, die nicht mit einem Neutronenabsorber dotiert sind (S1-S8), die um eine Strahlungsquelle (10) herum angeordnet sind, wobei N eine ganze Zahl größer oder gleich 3 ist;
- einen Fotovervielfältiger (P1-P8), der jedem Szintillator zugeordnet ist, um ein elektrisches Signal zu liefern, das für das Lichtsignal repräsentativ ist, das in dem Szintillator generiert wird;

wobei das System **dadurch gekennzeichnet ist, dass** es einen Rechner (2) umfasst, der zu Folgendem konfiguriert ist:

◦ Detektieren, in einem Zeitfenster, von Koinzidenzen von Pulsen, deren Multiplizität von der Ordnung 2 oder größer ist, zwischen den elektrischen Signalen, die durch die Fotovervielfältiger geliefert werden, wobei eine Pulskoinzidenz mit einer Multiplizität der Ordnung 2 oder größer detektiert wird, wenn in dem Zeitfenster ein erster Puls über das elektrische Signal detektiert wird, das durch den Fotovervielfältiger geliefert wird, der einem ersten Szintillator zugeordnet ist, ein zweiter Puls über das elektrische Signal detektiert wird, das durch den Fotovervielfältiger geliefert wird, der einem zweiten Szintillator zugeordnet ist, und ein dritter Puls über das elektrische Signal detektiert wird, das durch den Fotovervielfältiger geliefert wird, der einem dritten Szintillator zugeordnet ist;

◦ Bestimmen einer ersten Zahl von Koinzidenzen von Pulsen, deren Multiplizität von der Ordnung 2 oder größer ist, und bei denen der Zeitabstand zwischen dem ersten und dem zweiten Puls in einem ersten Zeitabstandsfenster enthalten ist, das derart gewählt ist, dass es Paare vom Typ (γ, n) und (n, n) enthält und Paare vom Typ (γ, γ) ausschließt;

∘ Bestimmen einer zweiten Zahl von Koinzidenzen von Pulsen, deren Multiplizität von der Ordnung 2 oder größer ist, und bei denen der Zeitabstand zwischen dem zweiten und dem dritten Puls in einem zweiten Zeitabstandsfenster enthalten ist, das derart gewählt ist, dass es Paare vom Typ (n, n) enthält und Paare vom Typ (γ, γ) und (γ, n) ausschließt;

∘ Registrieren, aus der ersten und der zweiten Zahl von Koinzidenzen von Pulsen mit einer Multiplizität von der Ordnung 2 oder größer, der Koinzidenzen, die in einer Zeitzone liegen, die durch das erste und das zweite Zeitabstandsfenster begrenzt ist, wodurch man eine Aufzählung der Koinzidenzen vom Typ (γ, n, n) und (n, n, n) erhält, die in dieser Zeitzone auftreten.

7. System nach Anspruch 6, bei dem die organischen Kunststoffszintillatoren die nicht mit einem Neutronenabsorber dotiert sind, Kunststoffszintillatoren aus Polyvinyltoluol (PVT) sind.

**Claims**

1. A method for detecting radiations, comprising the following steps, implemented by a calculator connected to N detectors arranged about a radiation source, N being an integer greater than or equal to 3, each detector comprising a photomultiplier associated with a plastic organic scintillator undoped with a neutron absorber, of:

   - detecting, in a time window, pulse coincidences the multiplicity of which is of order 2 or higher between the electric signals provided by the photomultipliers, a pulse coincidence of multiplicity of order 2 or higher being detected when, in the time window, a first pulse is detected in the electric signal provided by the photomultiplier associated with a first scintillator, a second pulse is detected in the electric signal provided by the photomultiplier associated with a second scintillator and a third pulse is detected in the electric signal provided by the photomultiplier associated with a third scintillator; the method being **characterised in that** it further comprises the following steps of:
   - determining a first number of pulse coincidences the multiplicity of which is of order 2 or higher and the time deviation of which between the first and second pulses is included in a first time deviation window chosen to include (γ, n) and (n, n) type pairs, and exclude (γ, γ) type pairs;
   - determining a second number of pulse coincidences the multiplicity of which is of order 2 or higher and the time deviation of which between the second and third pulses is included in a second time deviation window chosen to include (n, n) type pairs, and exclude (γ, γ) and (γ, n) type pairs;
   - counting, from the first and second numbers of pulse coincidences of multiplicity of order 2 or higher, coincidences located in a time zone delimited by the first and second time deviation windows, whereby a count of (γ, n, n) and (n, n, n) type coincidences occurring in this time zone is obtained.

2. The method according to claim 1, wherein the lower and upper bounds of the first and second time deviation windows are a function of the maximum distance between the scintillators and the source, and therefore the size and position of the scintillators and the source, as well as the maximum speed of the gamma radiations emitted by the source, for the lower bound, and the minimum speed of the neutrons detectable by the detectors, for the upper bound.

3. The method according to claim 2, wherein these lower and upper bounds are adapted as a function of the size and position of the radiation source and of the size and position of each scintillator and are typically of a few nanoseconds for the lower bound and a few hundreds of nanoseconds for the upper bound, for example, the lower bound, is typically from a few nanoseconds to 20ns, and the upper bound is from 50ns to 1000ns.

4. The method according to any of claims 1 to 3, further comprising a neutron generator, capable of generating neutrons in a pulsed manner, and wherein the time window during which the calculator detects pulse coincidences of a multiplicity of order 2 or higher is located between two successive pulses of the neutron generator.

5. The method according to any of claims 1 to 4, wherein the plastic organic scintillators undoped with a neutron absorber are plastic scintillators of polyvinyl-toluene (PVT).

6. A system for detecting radiation (1) comprising:

- N plastic organic scintillators undoped with a neutron absorber (S1-S8), arranged about a radiation source (10), N being an integer greater than or equal to 3;
- a photomultiplier (P1-P8) associated with each scintillator to provide an electric signal representative of the light signal generated in the scintillator;
- the system being **characterised in that** it comprises a calculator (2) configured to:

o detect, in a time window, pulse coincidences the multiplicity of which is of order 2 or higher between the electric signals provided by the photomultipliers, a pulse coincidence of multiplicity of order 2 or higher being detected when, in the time window, a first pulse is detected in the electric signal provided by the photomultiplier associated with a first scintillator, a second pulse is detected in the electric signal provided by the photomultiplier associated with a second scintillator and a third pulse is detected in the electric signal provided by the photomultiplier associated with a third scintillator;

- determine a first number of pulse coincidences the multiplicity of which is of order 2 or higher and the time deviation of which between the first and second pulses is included in a first time deviation window chosen to include ($\gamma$, n) and (n, n) type pairs, and exclude ($\gamma$, $\gamma$) type pairs;
- determine a second number of pulse coincidences the multiplicity of which is of order 2 or higher and the time deviation of which between the second and third pulses is included in a second time deviation window chosen to include (n, n) type pairs, and exclude ($\gamma$, $\gamma$) and ($\gamma$, n) type pairs;
- count, from the first and second numbers of pulse coincidences of multiplicity of order 2 or higher, coincidences located in a time zone delimited by the first and second time deviation windows, whereby a count of ($\gamma$, n, n) and (n, n, n) type coincidences occurring in this time zone is obtained.

7. The system according to claim 6, wherein the plastic organic scintillators undoped with a neutron absorber are plastic scintillators of polyvinyl-toluene (PVT).

## FIG. 1

## FIG. 2

Delta 3-2 (ps)

Delta 2-1 (ps)

# FIG. 3

Delta 3-2 (ps)

Delta 2-1 (ps)

# FIG. 4

FIG. 5

Générateur D-T: neutrons 14 Mev

Thermalisation du flux : Matrices hydrogénées

Détection en coïncidence : EJ-200

n (14MeV)

n interrogateurs

n et $\gamma$ prompts de fission

fission

Matière nucléaire interrogée

conteneur interrogé

Flux de neutrons

1 ms

10 ms

2 ms

temps

Acquisition en coïncidences

Fenêtre de coïncidence ($\sim$ 100 ns)

t=0   $t_1$   $t_2$   $t_3$   $t_{fin}$ = 100ns

FIG. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20160291196 A1
- FR 3010534 A1
- FR 2970339 A1
- FR 2947344 A1

**Littérature non-brevet citée dans la description**

- **B. PÉROT et al.** The characterization of radioactive waste: a critical review of techniques implemented or under development at CEA, France. *EPJ Nuclear Sci. Technol.,* 2018, vol. 4 (3), 1-24

- **B. SIMONY.** Cross-talk characterization in passive neutron coïncidence counting of radioactive waste drums with plastic scintillators. *IEEE Transactions on Nuclear Science,* Juin 2016, vol. 63 (3), 1513-1519
- **W.E. KUNZ et al.** A 1-nCi/g sensitivity transuranic waste assay system using pulsed neutron interrogation. *INMM Annual Meeting,* 1980